# EUROPEAN PATENT APPLICATION

(11) **EP 1 514 665 A1**
(43) Date of publication of application: **16.03.2005**
(21) Application number: 04017815.4
(22) Date of filing: 28.07.2004
(51) Int. Cl.: B29C 45/36, B29C 33/30

(54) **Method and apparatus for manufacturing large articles having a double wall using a piston to support a mould core**

(30) Priority: 10.09.2003 IT MI20031730
(71) Applicant: Palbox Pallets e Contenitori S.p.A., 39044 Egna (Bolzano) (IT)
(72) Inventor: Zeni, Mario, 38030 Daiano (Trento) (IT)
(74) Representative: Forattini, Amelia

(57) **Abstract**

A method and an apparatus for manufacturing double walls having a tubular structure for large articles, particularly but not exclusively large plastic containers, with dimensions on the order of 1 x 1 x 1 m, by an injection-molding process, characterized in that it comprises pistons (6) that, during injection, support the plate (5) that divides the mold cavity (7) so as to provide the gap between the two walls of the container.

## Description

The present invention relates to a method and an apparatus for manufacturing large articles having a tubular structure and a double wall.

More particularly, the present invention relates to the production of plastic products by using a press and a mold for the injection-molding of plastic materials; more specifically, the method and the apparatus according to the present invention are useful in the production of articles having connected double walls formed by tubular parts made of plastic.

The use of tubular structures arranged side by side in series in order to provide the walls of articles allows to give the walls, and therefore the articles, higher rigidity and mechanical strength while allowing to minimize the thickness of the walls.

However, up to now the provision of tubular structures has entailed technical difficulties and uncertainties in molding the articles, which in practice have never allowed their mass production.

It is well-known that the production of large articles by means of the injection-molding process is performed by using molds and presses having adequate dimensions and capacities.

To form an idea of the dimensions involved, it is sufficient to consider that a plastic box measuring approximately 1 x 1 x 1 m and weighing approximately 40 kg must be produced in a metal mold that weighs approximately 60 t and by using an injection-molding press that has a minimum closure capacity of 3000 t and weighs approximately 350 t on its own.

Further, the production process, in order to operate, uses power levels on the order of 700-800 kW.

Moreover, the mold for producing plastic articles is generally composed of one or more male parts and one or more female parts, with one or more movable parts that allow to close and open the mold.

The article is produced by following a cycle that can be summarized in the following steps:
1) closing and pressurizing the mold inside the press;
2) injecting liquid plastic at high temperature and pressure into the closed mold;
3) cooling the plastic until the solid article is formed inside the closed mold;
4) opening the mold and extracting the produced article from the mold.

The plastic is injected into the mold through openings known as injection points. The injection points are distributed within the mold so as to provide balanced and uniform injection of the plastic material.

The uniform and balanced distribution of the injection of the plastic material is a particularly critical condition of production; it is sufficient to consider that the plastic material is introduced in the mold through the injection points with a pressure of approximately 300 kg/cm².

Any "imbalance" in the injection will lead to tensions on the mold and inside the product to be provided.

Depending on the geometry and technology of the mold, these tensions can cause the product to warp, generally associated with typical defects such as the reduction of the mechanical characteristics and accordingly a greater fragility of the product.

In a more severe form, these imbalances can also prevent correct mass-production; this occurs, for example, when the liquid plastic is unable to reach all the cavities of the mold in the adequate quantities and with the adequate pressure.

The provision of a tubular wall by injection-molding is an extremely difficult process to achieve; especially when the dimensions of the cavity of the tubular region, i.e., the hollow part of the tubular region, are limited and the length of the tubular region to be provided is significant.

The cavity of the tubular region is in fact provided in the mold by means of an iron plate, which physically occupies the space that must not be filled by the plastic material.

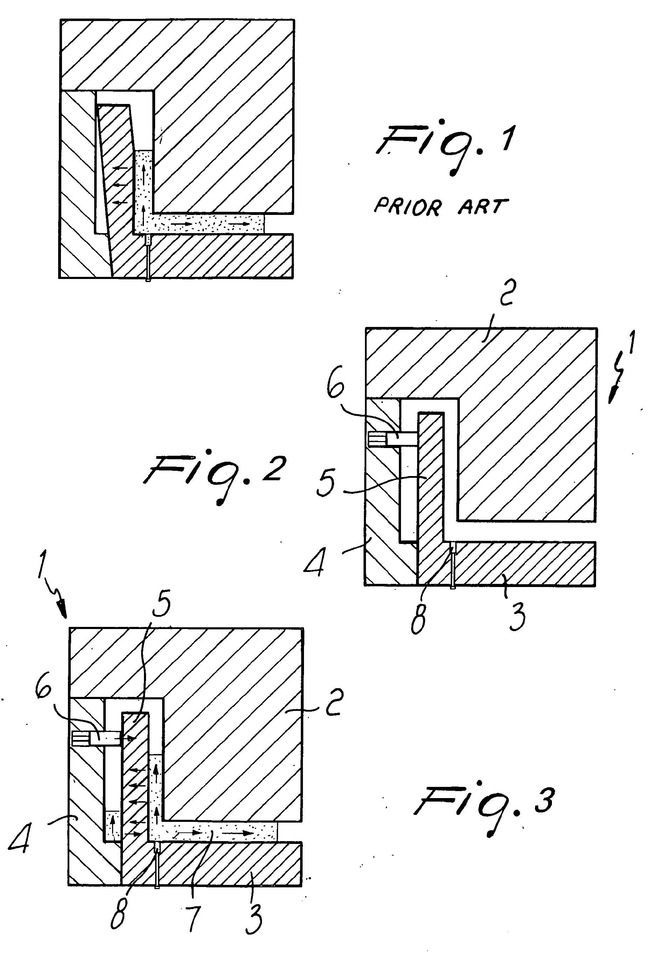

If the plate is thin, as it has to be in order to provide a tubular region with a narrow hollow, the pressure of the plastic material that is injected, 300 kg/cm², tends to bend the plate from its position, as shown schematically in Figure 1, so that the cavity of the tubular region tends to differ from the designed cavity and accordingly the walls of the tubular region do not have the required thickness and shape.

This situation is particularly severe, since the use of the tubular region has the specific purpose of obtaining walls that have a higher mechanical strength and a reduced intrinsic elasticity.

The fact that the tubular regions are connected, and therefore part of the plastic material directly reaches the side of the plate that lies opposite the injection point, slightly improves the imbalance in injection but does not solve the problem.

The aim of the present invention is to provide a method and an apparatus that overcome the drawbacks of the cited prior art.

This aim, and objects that will become better apparent hereinafter, are achieved by a method for manufacturing large articles having a tubular structure and a double wall, comprising the steps of:
partitioning a mold cavity by means of an intermediate member;
injecting molding material into the mold cavity that contains the intermediate member;
characterized in that during the injection step the intermediate member is temporarily supported so as to avoid deformations and displacements thereof.

This aim, and other objects that will become better apparent hereinafter, are also achieved by an apparatus for manufacturing large articles having a tubular structure with a double wall, comprising a mold into which molding material is injected, the mold being constituted by at least one male part and at least one female part that form between them at least one cavity in which an intermediate member is arranged, characterized in that it comprises a means for temporarily supporting the intermediate member that is adapted to keep the intermediate member in position during the injection of the molding material.

Further characteristics and advantages of the invention will become better apparent from the description of preferred but not exclusive embodiments thereof, illustrated by way of non-limiting example in the accompanying drawings, wherein:
Figure 1 is a schematic sectional view of a portion of an apparatus for injection-molding according to the prior art;
Figure 2 is a schematic sectional view of a portion of the apparatus for injection-molding according to the present invention;
Figures 3 to 6 are views, similar to Figure 2, of the steps of injection according to the method of the present invention.

With reference to the cited figures, the apparatus according to the invention comprises a mold, generally designated by the reference numeral 1, which is constituted by one or more male parts and by one or more female parts, with one or more movable parts that allow to close and open the mold.

Figures 2 to 6 illustrate a portion of the mold that comprises a male part 2, a female part 3 and a wall 4, which forms, with the male part 2, a mold cavity that is divided into two portions by a plate 5 of the female part 3.

The plate 5 lies within the mold cavity so as to form two mold cavity portions that will form, once injection is complete, two walls of the produced article that are separated by a gap formed by the plate 5.

According to the invention, supporting pistons 6 suitable to support the plate 5 during injection are arranged inside the mold 1.

The figures illustrate only one piston, by way of example, but the number and arrangement of the supporting pistons are of course suitable for the type of mold.

The function of the supporting pistons is to counterbalance the thrust of the pressure of the injected plastic material, designated by the reference numeral 7, on the plate 5, by making contact in positions that are calculated so as to apply an equal and opposite pressure to the plate during injection.

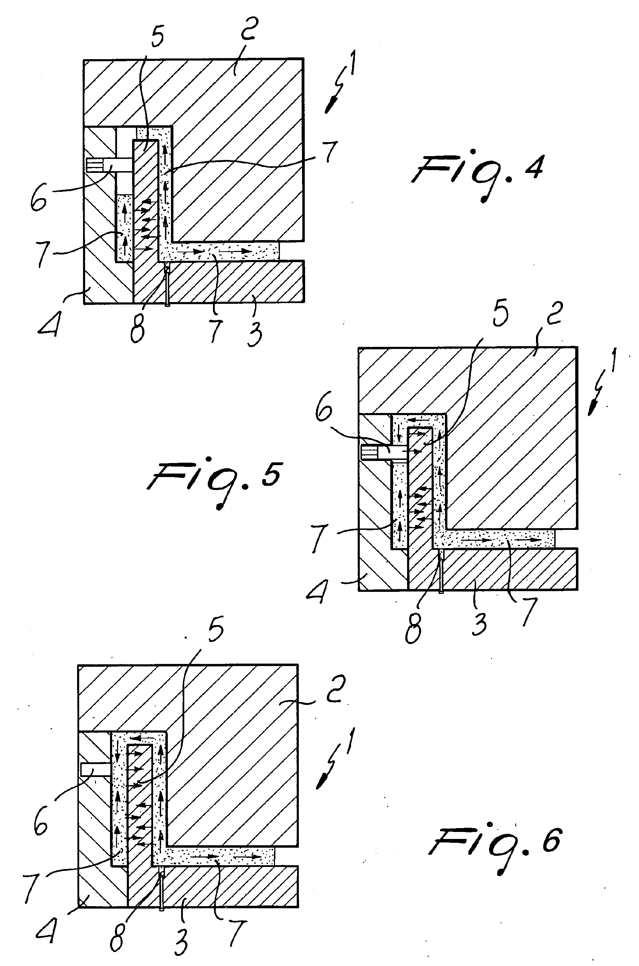

By way of example, if the injection point, designated by the reference numeral 8 in the figures, that lies closest to the plate 5 is on the left side of the plate, the plate tends to be pushed to the right. The piston 6 counterbalances this pressure by pushing in the opposite direction, as shown schematically in Figures 3 and 4.

The movements of the pistons are coordinated so that they retract when it is no longer necessary to balance the thrust of the plastic material and in any case before injection ends, so that the space occupied by the pistons is filled during the final part of the injection, as shown schematically in Figures 5 and 6, so as to avoid leaving in the product holes that correspond to the positions occupied by the pistons on the wall.

The operation of the apparatus according to the invention can be described schematically as follows.
A. Before injection, the pistons 6 are actuated so as to rest against the plate 5 and support it in the mold cavity, as shown in Figure 2.
B. Injection begins; the plastic material 7 gradually fills the mold cavities. The side of the plate 5 that lies closest to the injection point 8 is subjected to a gradually increasing pressure as its surface is affected by the injected plastic material 7.
C. The plastic material 7 substantially fills the entire cavity of the mold that lies between the injection point 8 and the side of the plate 5 and the pressure on the plate reaches its maximum value, as shown in Figure 3.
D. The plastic material starts to affect the opposite side of the plate 5; the pressure on the plate slowly decreases, as shown in Figure 4.
E. When the second surface of the plate 5 is almost completely affected, and accordingly the pressures on the two sides of the plate are almost equal, the supporting pistons 6 are actuated and retract into their seats. Figure 5 illustrates this step just before the piston 6 is retracted.
F. In the last seconds of the injection step, the empty spaces left by the supporting pistons are also filled, as shown in Figure 6.

In practice it has been found that the invention achieves the intended aim and objects, providing a method and an apparatus for manufacturing large articles, particularly but not exclusively large plastic containers, with dimensions on the order of 1 x 1 x 1 m, by means of an injection-molding process, with mass-production and high quality in terms of mechanical strength and reliability.

The apparatus and the method according to the invention are susceptible of numerous modifications and variations, within the scope of the appended claims. All the details may be replaced with technically equivalent elements.

The materials used, as well as the dimensions, may of course be any according to requirements and to the state of the art.

## Claims

1. An apparatus for manufacturing large articles having a tubular structure with a double wall, comprising a mold into which molding material is injected, said mold being constituted by at least one male part and at least one female part that form between them at least one cavity in which an intermediate member is arranged, **characterized in that** it comprises a means for temporarily supporting said intermediate member that is adapted to keep said intermediate member in position during the injection of said molding material.

2. The apparatus according to claim 1, **characterized in that** said supporting means is constituted by one or more pistons.

3. The apparatus according to claim 2, **characterized in that** said pistons can be retracted so as to completely clear the mold cavity.

4. A method for manufacturing large tubular articles having a double wall, comprising the steps of:
partitioning a mold cavity by means of an intermediate member;
injecting molding material into said mold cavity that contains said intermediate member;
**characterized in that** during said injection step said intermediate member is supported temporarily so as to avoid deformations and displacements thereof.

5. The method according to claim 4, **characterized in that** said supporting step is interrupted before said injection is completed, in order to eliminate the supporting means from the mold cavity.
